# EUROPEAN PATENT APPLICATION

(11) **EP 0 637 763 A1**
(43) Date of publication of application: **08.02.1995**
(21) Application number: 94305565.7
(22) Date of filing: 27.07.1994
(51) Int. Cl.: G02B 6/25

(54) **Apparatus for angle cleaving optical fibers**

(30) Priority: 04.08.1993 US 102030
(71) Applicant: AT&T Corp., New York, NY 10013-2412 (US)
(72) Inventor: Blonder, Greg E., Summit, New Jersey 07901 (US); Johnson, Bertrand Harold, Murray Hill, New Jersey 07974 (US); Paola, Carl Ralph, Westfield, New Jersey 07090 (US)
(74) Representative: Johnston, Kenneth Graham

(57) **Abstract**

In accordance with the invention, apparatus for cleaving optical fiber utilizes a pair of displaceable clamping surfaces to rotate the fiber about its axis before the cleaving step. Specifically, the apparatus comprises first holding means for securing the fiber against rotation at a first longitudinal position, a pair of displaceable clamping surfaces for clamping the fiber at a second position, and means for relatively displacing the surfaces to rotate the fiber. Cleaving means applied to the fiber between the first and second position effects cleavage with a tilted endface substantially free of subsurface damage and contaminants. A significant advantage of this apparatus is that it can angle cleave a single fiber or simultaneously cleave a plurality of fibers in a multi-fiber ribbon.

## Description

### Field of the Invention

This invention relates to apparatus for cleaving optical fiber and, in particular, to improved apparatus for cleaving fiber to produce a tilted (angled) endface suitable for low reflection optical joints.

### Background of the Invention

As high performance optical fiber communications systems are increasingly deployed, methods and apparatus for interconnecting fibers and for connecting fibers to optoelectronic devices assume increasing practical importance. For example, it is important to be able to cleave an optical fiber in such a fashion that the endface is tilted with respect to the fiber axis at an angle in excess of about 5° and is relatively free of subsurface damage and contamination. A tilted endface is needed in order to redirect reflected light that would otherwise be reflected back to the source. Joints made with tilted endface fibers can direct reflected light out of the transmission path. At the same time the tilted endfaces must be free of subsurface damage and contaminants to avoid deterioration of the optical signal being transmitted.

A useful approach to cleaving fiber and making such non-reflecting joints is disclosed in applicants' United States Patent No. 5,048,908 issued September 17, 1991. The '908 patent discloses that tilted optical fiber endfaces useful in low-reflection optical fiber joints can be produced by cleaving, provided the fiber is rotated through an appropriate twist angle.

The '908 patent describes apparatus for such cleaving comprising holding means for clamping the fiber, a collet for rotatably holding the fiber, and second holding means for clamping the fiber in position and optionally applying a tensile force in the range 50-300 grams. After the fiber is rotated, a conventional cleaving tool is brought into contact with the fiber producing the desired tilted endface.

The '908 apparatus is well suited for cleaving a single fiber. However, since the '908 invention, multi-fiber ribbon consisting of two or more closely-spaced fibers is being used in an increasing number of applications. It would be difficult and tedious to use the '908 apparatus one-by-one with the individual strands of a multi-fiber ribbon. Accordingly, there is a need for improved apparatus for angle cleaving one or more optical fibers.

### Summary of the Invention

Apparatus for cleaving optical fiber utilizes a pair of displaceable clamping surfaces to rotate the fiber about its axis before the cleaving step. Specifically, the apparatus comprises first holding means for securing the fiber against rotation at a first longitudinal position, a pair of displaceable clamping surfaces for clamping the fiber at a second position, and means for relatively displacing the surfaces to rotate the fiber. Cleaving means applied to the fiber between the first and second position effects cleavage with a tilted endface substantially free of subsurface damage and contaminants. A significant advantage of this apparatus is that it can angle cleave a single fiber or simultaneously cleave a plurality of fibers in a multi-fiber ribbon.

### Brief Description of the Drawings

In the drawings:
FIG. 1, which is prior art, illustrates the structure and function of a non-reflective optical fiber junction;
FIG. 2, which is also prior art, illustrates a multi-fiber ribbon for which the invention is particularly suited;
FIG. 3 is a schematic top view of fiber cleaving apparatus in accordance with one embodiment of the invention;
FIG. 4 is a schematic side view of the FIG. 3 device;
FIG. 5 is a schematic end view of the FIG. 3 device;
FIG. 6 is a graphical illustration showing the relation between the displacement distance x and the tilt angle φ for the cleaved fiber.

### Detailed Description

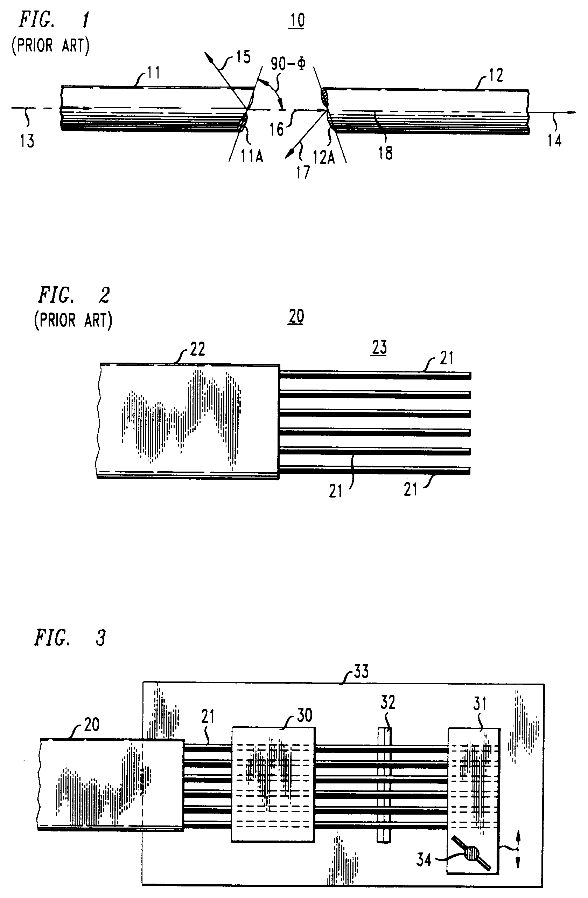

Referring to the drawings, FIG. 1 illustrates the relevant portion of a non-reflecting fiber joint 10 between a first optical fiber 11 and a second optical fiber 12. Radiation 13, as from a source (not shown) propagates towards the joint, with typically a large fraction of the radiant energy entering the second fiber and propagating away from the joint, as indicated by arrow 14. The endfaces 11A and 12A of the fibers are tilted at a nominal tilt angle φ relative to the fiber axis. When cleaved in accordance with the above-cited '908 patent, the endfaces are not planar but instead are somewhat curved in an approximately helical fashion. A part (15) of the radiation is reflected at the first fiber interface, and a part 16 impinges on the second fiber endface, with a portion 17 being reflected and a portion 18 being guided in the second fiber. For appropriately chosen φ(3°<φ<20° and preferably φ≧5°) radiation 15 cannot be guided by fiber 11 and exits from the fiber as shown. Furthermore, for an appropriately chosen tilt angle φ, reflected radiation 17 does not enter the core of fiber 11. Thus the reflected radiation is prevented from reflecting back into the laser.

FIG. 2 illustrates an increasingly important form of optical fiber in a multi-fiber ribbon 20 comprising a flat linear array of parallel optical fibers 21 closely spaced in a flexible plastic ribbon 22. The ribbon is shown with one end 23 stripped to expose the fibers for subsequent processing. The bare fibers are typically on the order of 125 micrometers in diameter and their center-to-center spacing in the linear array is on the order of 0.25 millimeters. Separate cleaving of individual ones of these closely spaced fibers is difficult and time consuming. It is particularly difficult to ensure that all fibers and faces are cleaved to the the same length, which is often a requirement when the fibers are to be used in a mechanical splice.

FIG. 3 is a schematic top view of fiber cleaving apparatus in accordance with the invention which is particularly useful in cleaving optical fibers of the type shown in FIG. 2 to produce the tilted endfaces shown in FIG. 1. In essence the apparatus comprises a fiber holding means 30 for securing fiber 21 against rotation at a first longitudinal region and a rotating element 31 comprising a pair of relatively displaceable surfaces for clamping onto the fiber and means for relatively displacing the surfaces, such as cam means 34, to rotate the fiber about its axis at a second longitudinal region. A cleaving tool 32 is disposed intermediate 30 and 31 for moving against the fibers after they are rotated. The cleaving tool can be any one of a variety of such tools known in the art including a direct impact cleaving tool or a circular wheel cleaving tool. Conveniently, elements 30, 31, and 32 can be mounted on a common base 33.

The apparatus can be applied to a single fiber with greater compactness than the collet arrangement of the prior art. However the preferred embodiment, as shown in FIG. 3, is adapted to simultaneously cleave a plurality of fibers 21 from a multi-fiber ribbon 20. Thus the fiber holding means 30 is preferably a hinged pair of elastomer coated planar metal surfaces capable of clamping onto a linear array of optical fibers and holding them longitudinally and rotationally secure. A significant advantage of this apparatus is that it can simultaneously cleave a plurality of fibers at equal length.

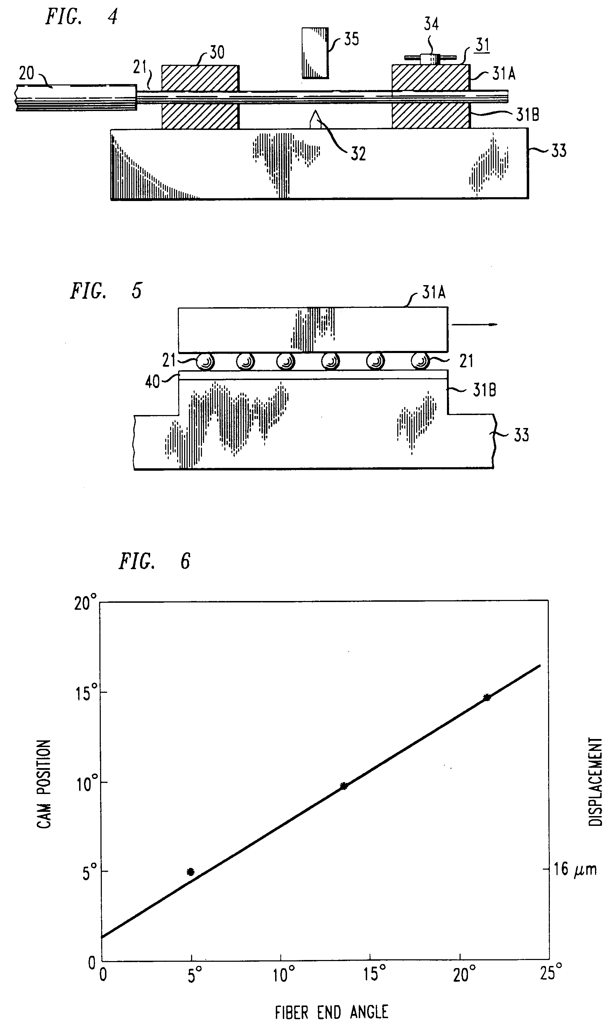

FIG. 4 is a schematic side view of the FIG. 3 apparatus showing the fiber 21 clamped in holder 30 and clamped between the relatively displaceable surfaces 31A and 31B of rotating element 31. Anvil 35, which can be made of elastomeric material, can contact the fibers on either longitudinal side of the cleaving tool 32 for putting the fiber under slight tension where the tool makes its contact.

FIG. 5 is a schematic end view of the FIG. 3 apparatus showing displaceable surfaces 31A and 31B clamping the fibers 21. When displaceable surface 31A is displaced with respect to surface 31B in a direction perpendicular to the axes of the fibers, the fibers are rotated about their respective axes. The displaceable surfaces 31A and 31B are preferably planar surfaces. Advantageously one surface, e.g. 31B is metal coated with elastomer 40 and the other (31A) is metal. Conveniently surface 31A can be clamped onto fibers 21 and displaced perpendicular to their axes by a cam-headed bolt 34.

In operation, an appropriate length of fiber is stripped of plastic and loaded in holder 30. The fiber is then placed on surface 31B and surface 31A is first clamped down on the fiber and then displaced by a controlled distance x as the cam 34 is engaged. For a direct impact cleaving tool and standard 125 µm diameter fiber, the fiber is rotated and the anvil preferably contacts the fiber before cleaving so that tension and torsion are applied before the tool contacts the fiber. For a circular wheel cleaving tool, the anvil can contact the fiber after the fiber is nicked by the cleaving tool. These actions propagate helical cleaves.

Alternatively, using a circular wheel cleaving tool for small diameter fibers (smaller than 125 µm) or large diameter fibers (141µm or greater), the anvil can contact the fiber prior to nicking in order to prevent undue bending and undue compression, respectively. The same approach can be used with fibers having integral coatings of polyimide or acrylate.

The relationship between the displacement distance and the nominal tilt angle φ for an exemplary apparatus with 0.25 inch spacing between elements 30 and 31 is shown in the graph of FIG. 5. The left vertical axis shows the angle of cam rotation, and the horizontal axis shows the tilt angle φ of the cleaved fiber. The right vertical axis shows the displacement x between surfaces 31A and 31B. As can be seen, a small displacement on the order of 16 micrometers can produce a tilt angle in excess of 7°. Thus to achieve the preferred φ≧5°, the displaceable surfaces 31A and 31B should be capable of relative displacement in excess of about 12 micrometers in the direction perpendicular to the fiber axis. It should be noted that the tilt angle (and thus the displacement distance) will change if the spacing between 30 and 31 changes. This is because the endface tilt angle is proportional to the angle through which the fiber is twisted and inversely proportional to the length between the fixed end and the rotating end. While the invention has been illustrated using planar displaceable surfaces, other geometries such as cylindrical displaceable surfaces could also be used.

## Claims

1. In apparatus for cleaving optical fiber comprising holding means for holding a fiber secure against rotation at a first longitudinal region, means for rotating said fiber about its longitudinal axis at a second longitudinal region, and cleaving tool means for contacting said fiber between said first and second longitudinal regions,
the improvement wherein said means for rotating said fiber comprises a pair of displaceable surfaces for clamping onto said fiber and means for relatively displacing said surfaces perpendicular to the fiber axis.

2. Apparatus according to claim 1 wherein said displaceable surfaces are planar surfaces.

3. Apparatus according to claim 1 wherein one of said pair of displaceable surfaces is elastomeric and the other surface is metal.

4. Apparatus according to claim 1 wherein said means for relatively displacing said surfaces comprises cam means.

5. Apparatus according to claim 1 wherein said means for relatively displacing said surfaces comprises cam means.

6. Apparatus according to claim 1 further comprising means for placing said fiber under tension in a longitudinal region between said first and second longitudinal regions.

7. Apparatus for cleaving the fibers of a multi-fiber ribbon comprising:
holding means for holding a plurality of fibers from said ribbon secure against rotation at a first longitudinal region;
means for simultaneously rotating each fiber of said plurality about its axis at a second longitudinal region; and
cleaving tool means for contacting each fiber in said plurality between said first and second longitudinal regions.

8. Apparatus according to claim 7 wherein said means for simultaneously rotating each fiber of said plurality comprises a pair of displaceable surfaces for clamping onto said fibers and for rotating said fibers in response to relative displacement of said surfaces.

9. Apparatus according to claim 8 wherein said surfaces are planar surfaces.

10. Apparatus according to claim 8 wherein one of said pair of displaceable surfaces is elastomeric and the other surface is metal.

11. Apparatus according to claim 8 further comprising means for applying tensile force to each fiber of said plurality between said holding means and the rotating means.

12. Apparatus according to claim 8 including means for relatively displacing said displaceable surfaces in excess of 12 micrometers in the direction perpendicular to said fiber axis for providing a cleaved endface tilted at an angle in excess of 5° with respect to the fiber axis.
